# FASCICULE DE BREVET EUROPEEN

(11) **EP 1 649 990 B1**
(45) Date de publication et mention de la délivrance du brevet: **21.07.2010**
(21) Numéro de dépôt: 05292218.4
(22) Date de dépôt: 21.10.2005
(51) Int. Cl.: B26F 1/38, B26D 7/27, B29C 67/00, B60R 19/02

(54) **Procédé de fabrication d'une pièce peinte en matière plastique pour l'industrie automobile, comportant un orifice ayant une embouchure rayonnée et l'utilisation du procédé**
Verfahren zum Herstellen eines gefärbten Kunststoffteiles, für die Autoindustrie, versehen von einem Durchbruch mit einer abgerundeten Kante und Anwendung des Verfahrens
Process for making a painted part of plastics material, for the car industry , comprising a hole with a rounded edge and use of the process

(30) Priorité: 21.10.2004 FR 0411226
(43) Date de publication de la demande: 26.04.2006
(73) Titulaire: COMPAGNIE PLASTIC OMNIUM, 69007 Lyon (FR)
(72) Inventeur: Bocaccio, Bernard, 01360 Bresolles (FR); Brizin, Jérôme, 01100 ARBENT (FR); Verwaerde, Marc, 38460 Moras (FR); Virelizier, François, 38080 SAINT MARCEL BEL ACCUEIL (FR)
(74) Mandataire: Remy, Vincent Noel Paul

(56) Documents cités:
- EP-A- 0 323 213
- EP-A- 1 468 794
- DE-A1- 10 144 136
- DE-A1- 10 239 452
- DE-A1- 10 239 453
- PATENT ABSTRACTS OF JAPAN vol. 006, no. 050 (M-120), 3 avril 1982 (1982-04-03) & JP 56 165531 A (MASPRO DENKOH CORP), 19 décembre 1981 (1981-12-19)
- PATENT ABSTRACTS OF JAPAN vol. 003, no. 126 (M-077), 20 octobre 1979 (1979-10-20) & JP 54 104092 A (HITACHI LTD), 15 août 1979 (1979-08-15)

## Description

La présente invention concerne un procédé de fabrication d'une pièce peinte en matière plastique pour l'industrie automobile, comportant un orifice ayant une embouchure rayonnée, et utilisation du procédé.

Actuellement, lorsqu'une pièce en matière plastique peinte doit comporter un orifice rayonné, c'est-à-dire ayant une embouchure sans arête, mais arrondie selon un rayon de courbure prédéterminé, on réalise l'orifice par poinçonnage et, simultanément, on rayonne l'orifice à l'aide d'une forme intégrée au poinçon. La simultanéité de ces deux opérations est considérée comme un gain de temps car elle réduit le nombre de manipulations de la pièce, au regard des seules opérations de poinçonnage et de rayonnage, voir par exemple EP-A-1468794.

En dépit du gain de temps apparent mentionné ci-dessus, les inventeurs à la base de l'invention se sont aperçus que, de manière plus globale, le fait de rayonner l'orifice en même temps qu'on le poinçonne ne présente pas que des avantages.

Tout d'abord, l'opération de rayonnage, qui est délicate puisqu'elle entraîne un fluage de la matière, ne se produit pas dans des conditions optimales, du fait de la présence du poinçon dans l'orifice pendant que l'outil de rayonnage déforme l'embouchure de l'orifice. Ceci nuit à la qualité du rayonnage, de sorte qu'on renonce à poinçonner-rayonner des pièces déjà peintes, la peinture étant trop dégradée par le rayonnage.

Il s'en suit que les orifices sont toujours réalisés avant peinture, ce qui oblige à une conservation d'un stock intermédiaire de pièces non peintes pour répondre aux commandes de véhicules en fonction des options demandées, lesquelles déterminent souvent si la présence d'un orifice rayonné est requis sur la pièce. En particulier, c'est le cas des capteurs à ultrasons pour l'aide au stationnement.

En outre, le fait de peindre la pièce après réalisation de l'orifice oblige à maroufler ce dernier en vue de la peinture, pour empêcher le dépôt, sur la face intérieure de la pièce, d'un brouillard de peinture qui passerait par l'orifice et gênerait la fixation, par exemple par collage ou soudage, d'un organe devant occuper l'orifice. Comme déjà indiqué, un exemple d'un tel organe est un capteur à ultrasons pour l'aide au stationnement, qui équipe en option certaines peaux de pare-chocs.

De plus, on constate que le poinçonnage-rayonnage laisse quelquefois des fils de matière à proximité de l'orifice, fils qu'il faut impérativement éliminer avant la peinture sous peine de les fixer sous la couche de peinture.

Enfin, on constate également que la peinture d'une pièce comportant un orifice provoque un « effet de bord » autour de l'orifice. Cet effet de bord, qui est bien connu, se manifeste par une accumulation de peinture à la périphérie de l'orifice, visible en lumière rasante, ce qui nuit à l'esthétique de la pièce.

Il existe donc des contre-indications à poinçonner-rayonner des pièces devant être peintes, contrairement à l'idée répandue selon laquelle la réalisation simultanée des ces deux opérations serait un gain de temps.

L'invention a pour but de remédier à ces inconvénients en fournissant un procédé de fabrication d'une pièce peinte en matière plastique pour l'industrie automobile, comportant un orifice ayant une embouchure rayonnée, consistant à mouler la pièce, puis à la soumettre aux opérations de poinçonnage, rayonnage, peinture, selon un ordre prédéterminé, caractérisé en ce que l'ordre prédéterminé est le suivant :
a°) peinture,
b°) poinçonnage sans rayonnage à l'aide d'un poinçon pour obtenir l'orifice,
c°) rayonnage de l'embouchure de l'orifice, après libération de l'orifice par le poinçon.

En effet, les inventeurs ont remarqué que le fait de rayonner sans poinçon permet à la matière de mieux fluer, au point que même la peinture peut supporter le rayonnage sans craqueler ni marquer. Il devient donc possible, grâce à l'invention, de poinçonner et rayonner des pièces peintes.

On évite ainsi tous les problèmes précédemment rappelés liés au fait que la peinture devait être réalisée après poinçonnage.

Un procédé selon l'invention peut comporter l'une ou plusieurs des caractéristiques suivantes :
- on rayonne l'embouchure de l'orifice selon un rayon d'au moins 0,9 mm ;
- on met en oeuvre le poinçonnage à une température donnée, appropriée pour cette opération, puis on met en oeuvre le rayonnage à une autre température donnée, appropriée pour le rayonnage ;
- on met en oeuvre le poinçonnage à une vitesse donnée, appropriée pour cette opération, puis on met en oeuvre le rayonnage à une autre vitesse donnée, appropriée pour le rayonnage.
- on réalise, à l'aide du poinçonnage et du rayonnage, un orifice adapté pour recevoir un capteur à ultrasons pour l'aide de stationnement.

L'invention concerne également une utilisation du procédé pour la fabrication d'une peau de pare-chocs.

L'invention sera mieux comprise à la lecture de la description qui va suivre, donnée uniquement à titre d'exemple et faite en se référant aux dessins annexés dans lesquels :
- la figure 1 représente, en coupe, une pièce en matière plastique juste avant son poinçonnage, entre un poinçon porté par un vérin et une matrice ;
- la figure 2 représente, en coupe, la pièce de la figure 1 après son poinçonnage et juste avant rayonnage de l'orifice, entre un outil rayonnant et la matrice ;
- la figure 3 est analogue à la figure 2 et montre l'opération de rayonnage en cours ;
- la figure 4 est une vue en coupe de la pièce après rayonnage de l'orifice.

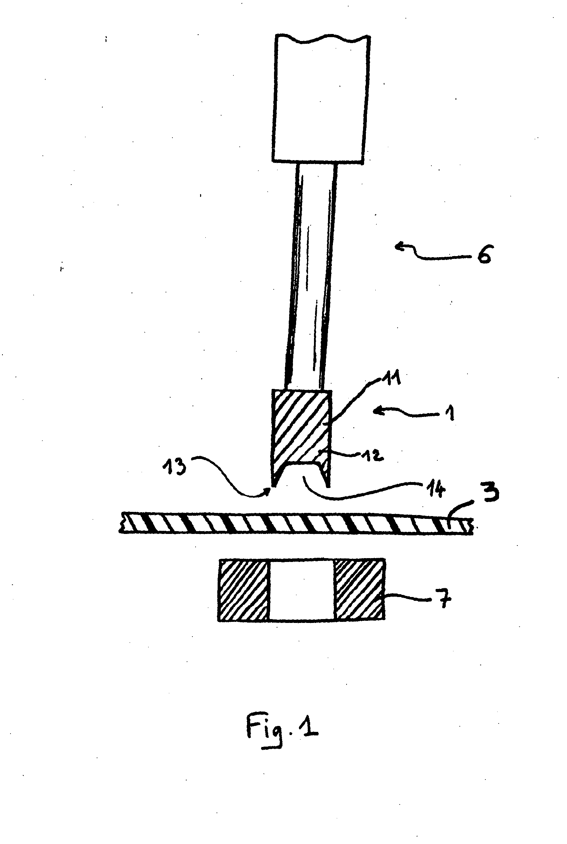

On a représenté sur les figures 1 à 4 une pièce 3 en matière plastique pour l'industrie automobile lors d'étapes successives d'un procédé de fabrication de cette pièce 3.

Lors d'une étape préliminaire, la pièce 3 est moulée, par exemple en une peau de pare-chocs.

Cette pièce 3 est ensuite soumise à des opérations destinées à réaliser un orifice 4 ayant une embouchure 5 rayonnée dans cette pièce 3. Par exemple, cet orifice 4 est destiné à recevoir un capteur à ultrasons pour l'aide au stationnement.

La première opération est une opération de peinture de la pièce 3 à l'aide de moyens classiques.

La deuxième opération est une opération de poinçonnage sans rayonnage de la pièce 3 pour obtenir l'orifice 4.

Cette opération de poinçonnage est effectuée à l'aide d'un poinçon 1 monté sur un vérin 6. Ce poinçon 1 est muni d'une tête de poinçon 11, comportant un corps 12 comprenant une extrémité coupante 13. Cette extrémité coupante 13 comporte un évidemment 14 destiné à autoriser un dégagement de la matière lors du poinçonnage.

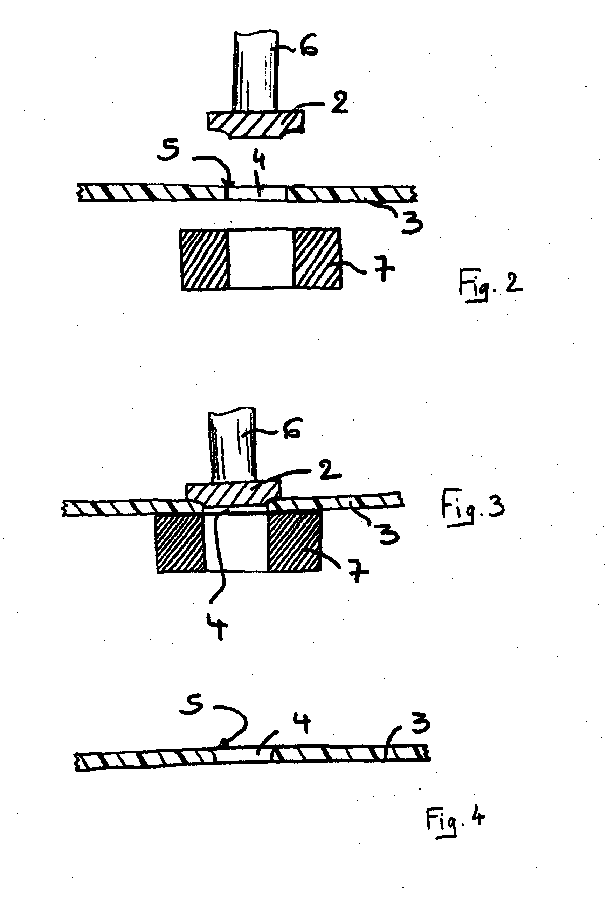

Une fois l'orifice 4 réalisé dans la pièce peinte 3, le poinçon 1 est retiré de l'orifice 4. A ce stade du procédé, l'embouchure 5 est une arête vive, comme visible sur la figure 2.

On passe alors à une troisième opération, qui est une opération de rayonnage de l'embouchure 5 de l'orifice 4 ainsi libéré par le poinçon 1, comme représentée en figure 3.

Cette opération est réalisée à l'aide d'un outil rayonnant 2, monté sur le vérin 6 à la place du poinçon 1, et d'une matrice de rayonnage 7 de type connu.

On notera que la vitesse optimale de rotation du poinçon 1 et la température optimale appropriées pour le rayonnage sont généralement différentes de la vitesse optimale de rotation du poinçon 1 et la température optimale appropriées pour le poinçonnage.

Grâce au procédé selon l'invention, les opérations de poinçonnage et de rayonnage ne sont pas effectuées simultanément, ce qui permet de modifier la vitesse de rotation du poinçon 1 et la température entre chaque opération, afin d'optimiser ces deux opérations.

Ainsi, on met en oeuvre le poinçonnage à une température donnée, appropriée pour le poinçonnage, puis on met en oeuvre le rayonnage à une autre température donnée, appropriée pour le rayonnage, et on met en oeuvre le poinçonnage à une vitesse donnée, appropriée pour le poinçonnage, puis on met en oeuvre le rayonnage à une autre vitesse donnée, appropriée pour le rayonnage.

Par ailleurs, puisque l'orifice 4 est libéré par le poinçon 1 lors de l'opération de rayonnage, le fluage de la matière est autorisé vers l'intérieur de l'orifice 4, en dessous de l'outil rayonnant 2. Un tel fluage est avantageux puisqu'il ne détériore pas la peinture de la pièce 3.

L'embouchure 5 ainsi rayonnée est représentée sur la figure 5.

De préférence, cette embouchure 5 de l'orifice 4 est rayonnée selon un rayon d'au moins 0,9 mm.

On notera que l'invention n'est pas limitée aux mode de réalisation précédemment décrit.

En effet, le poinçonnage peut être mis en oeuvre sur tas ou selon toute autre méthode connue plutôt que sur matrice.

## Revendications

1. Procédé de fabrication d'une pièce (3) peinte en matière plastique pour l'industrie automobile, comportant un orifice (4) ayant une embouchure (5) rayonnée, consistant à mouler la pièce, puis à la soumettre aux opérations de poinçonnage, rayonnage, peinture, selon un ordre prédéterminé, **caractérisé en ce que** l'ordre prédéterminé est le suivant :
a°) peinture,
b°) poinçonnage sans rayonnage à l'aide d'un poinçon (1) pour obtenir l'orifice (4),
c°) rayonnage de l'embouchure (5) de l'orifice (4), après libération de l'orifice (4) par le poinçon (1).

2. Procédé selon la revendication 1, dans lequel on rayonne l'embouchure (5) de l'orifice (4) selon un rayon d'au moins 0,9 mm.

3. Procédé selon l'une quelconque des revendications 1 à 2, dans lequel on met en oeuvre le poinçonnage à une température donnée, appropriée pour cette opération, puis on met en oeuvre le rayonnage à une autre température donnée, appropriée pour le rayonnage.

4. Procédé selon l'une quelconque des revendications 1 à 3, dans lequel on réalise, à l'aide du poinçonnage et du rayonnage, un orifice (4) adapté pour recevoir un capteur à ultrasons pour l'aide au stationnement.

5. Utilisation du procédé selon l'une quelconque des revendications 1 à 4 pour la fabrication d'une peau de pare-chocs.

## Claims

1. A method of manufacturing a painted part (3) of plastics material for the automobile industry, the part including an orifice (4) having an opening (5) with a rounded edge, the method consisting in molding the part, and then in subjecting it to the operations of punching, edge-rounding and painting in a predetermined order, the method being **characterized in that** the predetermined order is as follows:
a) painting;
b) punching without edge-rounding using a punch (1) to obtain the orifice (4); and
c) rounding the edge of the opening (5) of the orifice (4) after extracting the punch (1) from the orifice (4).

2. A method according to claim 1, in which the opening (5) of the orifice (4) has its edge rounded to a radius of at least 0.9 mm.

3. A method according to claim 1 or claim 2, in which punching is performed at a given temperature appropriate for punching, and then edge-rounding is performed at another given temperature, appropriate for edge-rounding.

4. Method according to any one of claims 1 to 3, in which an orifice is made thanks to the operations of punching and edge-rounding, the orifice being adapted to receive an ultrasound sensor for parking assistance.

5. Use of the method according to any one of claims 1 to 4, for manufacturing a bumper skin of an automotive vehicle.

## Patentansprüche

1. Verfahren zum Herstellen eines gefärbten Kunststoffteils (3) für die Autoindustrie, das mit einem Durchbruch (4) versehen ist, der eine sich verbreiternde Mündung (5) hat, das darin besteht, das Teil zu formen und es dann den Operationen Stanzen, Verbreitern, Färben in einer vorbestimmten Reihenfolge zu unterziehen, **dadurch gekennzeichnet, dass** die vorbestimmte Reihenfolge die folgende ist:
a) Färben,
b) Stanzen ohne Verbreitern mit Hilfe eines Stempels (1), um den Durchbruch (4) zu erzielen,
c) Verbreitern der Mündung (5) des Durchbruchs (4) nach Freilegen des Durchbruchs (4) durch den Stempel (1).

2. Verfahren nach Anspruch 1, bei dem man die Mündung (5) des Durchbruchs (4) mit einem Radius von mindestens 0,9 mm abrundet.

3. Verfahren nach einem der Ansprüche 1 bis 2, bei dem man das Stanzen bei einer gegebenen Temperatur durchführt, die für diese Operation geeignet ist, und dann das Verbreitern bei einer anderen gegebenen Temperatur, die für das Verbreitern geeignet ist, ausführt.

4. Verfahren nach einem der Ansprüche 1 bis 3, bei dem man mit Hilfe des Stanzens und des Verbreiterns einen Durchbruch (4) herstellt, der einen Ultraschallsensor für eine Einparkhilfe aufnehmen kann.

5. Verwendung des Verfahrens nach einem der Ansprüche 1 bis 4 zum Herstellen einer Stoßfängerverkleidung.
